# EUROPÄISCHE PATENTSCHRIFT

(11) **EP 2 509 745 B1**
(45) Veröffentlichungstag und Bekanntmachung des Hinweises auf die Patenterteilung: **26.06.2013**
(21) Anmeldenummer: 10768731.1
(22) Anmeldetag: 13.10.2010
(51) Int. Cl.: B24B 19/16, B24B 41/06, B23K 11/30

(54) **BAUSATZ ZUM NACHRÜSTEN EINER ELEKTRODENSCHLEIFVORRICHTUNG UND ELEKTRODENSCHLEIFVORRICHTUNG**
KIT FOR RETROFITTING AN ELECTRODE GRINDING DEVICE AND ELECTRODE GRINDING DEVICE
MODULE POUR L'ÉQUIPEMENT ULTÉRIEUR D'UN DISPOSITIF DE MEULAGE D'ÉLECTRODES ET DISPOSITIF DE MEULAGE D'ÉLECTRODES

(30) Priorität: 10.12.2009 DE 102009044855
(43) Veröffentlichungstag der Anmeldung: 17.10.2012
(73) Patentinhaber: Tamm, Rolf, 88682 Salem (DE)
(72) Erfinder: Tamm, Rolf, 88682 Salem (DE)
(74) Vertreter: Weisse, Renate
(86) Internationale Anmeldenummer: PCT/EP2010/065338
(87) Internationale Veröffentlichungsnummer: WO 2011/069718

(56) Entgegenhaltungen:
- DE-A1- 10 010 520
- DE-A1-102006 052 904
- DE-B3- 10 243 210

## Beschreibung

### Technisches Gebiet

Die Erfindung betrifft einen Bausatz zum Nachrüsten einer Vorrichtung zur Bearbeitung von Schweißelektroden mit zwei von einem Antriebsmotor über eine Welle angetriebenen Schleifscheiben, welche in einem zweiteiligen Gehäuse umlaufen, wobei in dem Gehäuse wenigstens ein Durchbruch zur Führung einer zu bearbeitenden Schweißelektrode in defmierter Lage zu der Schleifscheibe vorgesehen ist.

Die Erfindung betrifft ferner eine Vorrichtung zur Bearbeitung von Schweißelektroden mit zwei von einem Antriebsmotor über eine Welle angetriebenen Schleifscheiben, welche in einem gemeinsamen Hohlraum in einem zweiteiligen Gehäuse umlaufen, wobei in den Gehäuseteilen jeweils wenigstens ein Durchbruch zur Führung einer zu bearbeitenden Schweißelektrode in definierter Lage zu der Schleifscheibe vorgesehen ist.

Schweißelektroden bestehen aus einem sehr harten und gegen hohe Temperaturen beständigen Material wie Wolfram. Es gibt Schweißelektroden von unterschiedlichem Querschnitt. Die Schweißelektroden laufen in einer Spitze oder in einer Schneide aus. Diese Form der Schweißelektroden hängt von der jeweiligen Anwendung ab. Die Spitzen der Schweißelektroden verschleißen im Betrieb.

Schweißelektroden können ohne Anschliff oder mit einer vorgefertigten Spitze gekauft werden. Nach dem Gebrauch ist die Spitze oder der Anschliff verschlissen. Die Schweißelektroden werden dann nachgeschliffen oder verworfen. Das ist wegen des hochwertigen Materials sehr teuer.

### Stand der Technik

Es ist bekannt, Schweißelektroden an- oder nachzuschleifen. Das geschieht üblicherweise von Hand auf offenen Schleif- oder Trennscheiben. Dieses Verfahren ist ungenau und gefährlich. Weiterhin sind Vorrichtungen mit einer offenen Schleifscheibe bekannt, bei denen die Schweißelektroden durch eine Führungshülse unter einem bestimmten Winkel gegen die Schleifscheibe geführt werden. Auch solche Vorrichtungen sind aufwendig. Es ist insbesondere aufwendig, die Vorrichtung zur Anpassung an verschiedene Typen von Schweißelektroden oder an verschiedene Spitzen- oder Schneidenformen umzurüsten. Dabei ist insbesondere ein Austausch der Führungshülsen erforderlich.

Eine Vorrichtung, mit welcher Elektroden mit einer Vielzahl (z.B. 6) von unterschiedlichen Elektrodendurchmessem mit einer Vielzahl von unterschiedlichen Spitzenwinkeln (z.B. 4) und mit einer Vielzahl von Längen hergestellt werden können, ist ein wertvolles, kostensparendes Hilfsmittel.

Aus der DE 100 10 520 A1 ist eine Vorrichtung zur Bearbeitung von Schweißelektroden mit einer Schleifscheibe bekannt. Die Schleifscheibe läuft in einem Schleifscheibengehäuse um. Die Vorrichtung weist weiterhin einen Gehäuseaufsatz auf, welcher an dem Schleifscheibengehäuse befestigbar ist und wenigstens einen Durchbruch zur Führung einer zu bearbeitenden Schweißelektrode in definierter Lage zu der Schleifscheibe aufweist. Dabei fällt die Ebene der Schleifscheibe im wesentlichen mit der Trennebene zwischen dem Schleifscheibengehäuse und dem Aufsatz zusammen. Der Aufsatz kann eine Mehrzahl von gegeneinander versetzten, unterschiedlichen Durchbrüchen zur Aufnahme unterschiedlicher Typen von Schweißelektroden aufweisen. Der Aufsatz kann aber auch eine Mehrzahl von gegeneinander versetzten Durchbrüchen aufweisen, deren Achsen die Ebene der Schleifscheibe unter unterschiedlichen Winkeln schneiden. In dem Schleifscheibengehäuse kann ein sich über die Stirnfläche des Gehäuses erstreckender radialer Schlitz gebildet sein, durch welchen hindurch eine Schweißelektrode zum Durchtrennen an die Mantelfläche der Schleifscheibe anlegbar ist. Bei der offenbarten Vorrichtung ist die Schleifscheibe an einer Schleifscheibenaufnahme befestigt, die ihrerseits mit der Motorwelle des Antriebsmotors verbunden ist. Die gesamte Vorrichtung bildet eine tragbare Einheit.

Aus der DE 102 43 210 B3 ist eine Anordnung bekannt, bei der zwei parallele Schleifscheiben unterschiedlicher Körnung eingesetzt werden. Eine erste Schleifscheibe läuft in einem Hohlraum zwischen dem Motoraufsatz und einem ersten Gehäuseaufsatz um. Die zweite Schleifscheibe läuft in einem zweiten Hohlraum zwischen dem ersten Gehäuseaufsatz und dem zweiten Gehäuseaufsatz um. Die Gehäuseaufsätze sind mit Durchbrüchen zur Führung der Schweißelektroden versehen. Die bekannte Anordnung erlaubt den Einsatz unterschiedlicher Schleifscheiben mit Standardmaßen ohne Umbau.

Die Anordnung verwendet neben einem Motor mit einem Motorgehäuse weitere Gehäuseteile: einen Motorflansch, der direkt am Motorgehäuse angeschraubt wird und wenigstens einen Gehäuseteil, in dem die Durchbrüche zur Führung der Elektroden vorgesehen sind. Die Durchbrüche erstrecken sich jeweils von der dem Motor abgewandten Seite im Gehäuseteil in Richtung auf die Schleifscheibe, die zwischen dem Motorflansch und dem Gehäuseteil umläuft. Je nach Anzahl der Schleifscheiben werden weitere Gehäuseteile aufgesetzt. Auch hier beginnen die Durchbrüche auf der dem Motor abgewanden Seite. Mit anderen Worten: Die Elektroden werden immer auf den Motor zu in die Durchbrüche eingeführt. Die Anordnung ist je nach Anzahl der Gehäuseteile vergleichsweise lang und benötigt eine lange Antriebswelle. Zur Befestigung der Gehäuseteile sind mehrere weitere Befestigungsbauteile, wie Schrauben, Muttern, Stifte etc. erforderlich.

DE 10 2006 052904 A1 offenbart eine Anordnung, bei welcher zwei Schleifscheiben oder Abriebflächen unterschiedlicher Körnung praktisch in einer Ebene in einem gemeinsamen Hohlraum umlaufen. Die Abriebflächen sind bei der bekannten Anordnung voneinander abgewandt. Zwischen den Schleifscheiben ist eine dritte Scheibe größeren Durchmessers angeordnet. An dieser Scheibe können Elektroden geschnitten werden. Die Anordnung arbeitet entweder mit einer Schleifscheibe mit zwei Abriebflächen unterschiedlicher Körnung oder mit einer Schleifscheibenanordnung aus wenigstens zwei Schleifscheiben.

Die Bohrungen, in denen die Elektroden geführt werden, werden mit hoher Präzision bezüglich des Winkels gefertigt. Dabei wird davon ausgegangen, dass die zugehörige Schleifscheibe in definierter Lage relativ zum Gehäuse rotiert. Bei unterschiedlicher Dicke oder Verwendung mehrerer Schleifscheiben ist dies nicht mehr gewährleistet. Dann entspricht der Anschleifwinkel nicht mehr dem Sollwert.

Bei der Herstellung von einfachen Schleifscheiben wird ein Rohling in ein Bad getaucht, wobei das Schleifmittel auf den Rohling aufgebracht wird. Entsprechend ist es aufwändig Schleifscheiben mit einer unterschiedlichen Körnung auf der Ober- und Unterseite herzustellen. Es ist daher einfacher, eine Schleifscheibenanordnung mit zwei Abriebflächen auf unterschiedlichen Schleifscheiben zu verwenden. Um sicherzustellen, dass die Abriebfläche immer noch in der für die Erreichung der hohen Genauigkeit des Anschleifwinkels erforderlichen Ebene rotiert, werden besonders dünne Schleifscheiben verwendet. Die Schleifscheiben haben dann eine Dicke, die so ausgewählt ist, dass alle Schleifscheiben zusammen die Dicke einer Standard-Schleifscheibe aufweist, die für einfache Anordnungen verwendet wird. Die bekannte Anordnung arbeitet folglich nur dann mit hoher Genauigkeit, wenn Sonderanfertigungen als Schleifscheibe gewählt werden.

### Offenbarung der Erfindung

Es ist Aufgabe der Erfindung, eine handliche, kompakte Schleifvorrichtung der eingangs genannten Art zu schaffen, welche ohne Umbau zwei Abriebflächen zur Auswahl bietet und gleichzeitig mit einfach herzustellenden Schleifscheiben arbeitet. Es ist ferner Aufgabe der Erfindung, einen Bausatz zu schaffen, mit welchem bekannte Schleifvorrichtungen mit einer weiteren, kostengünstigen und einfachen Schleifscheibe bei annhähernd gleicher Baulänge aufgerüstet werden können.

Erfindungsgemäß wird die Aufgabe mit einem Bausatz gelöst, enthaltend
(a) eine weitere Schleifscheibe;
(b) einen Distanzring, dessen Durchmesser dem Durchmesser des Gehäuses entspricht und dessen Dicke der Dicke der Schleifscheibe entspricht; und
(c) eine Zentrierhülse, mit einer Länge in axialer Richtung, die größer ist, als die Dicke der Schleifscheibe.

Der Hohlraum, in dem die Schleifscheibe in einer bestehenden Anordnung umläuft, wird lediglich mit einem Distanzring verbreitert. Der Distanzring weist die Dicke einer Schleifscheibe auf. Die Abriebflächen laufen auf diese Weise immer noch genau in der durch die Bohrungen definierten Sollebene. Es muss kein weiteres Gehäuse mit einer weiteren Scheibe aufgesetzt werden. Es ist auch keine Schleifscheibenanordnung mit dünnen oder zweiseitig unterschiedlich beschichteten Scheiben erforderlich. Es können immer Standardschleifscheiben einheitlicher Dicke verwendet werden. Die Schleifscheiben werden mit einer Zentrierhülse auf die gleiche Achse zentriert. Die Zentrierhülse erstreckt sich durch die Mittenbohrung über die Dicke einer der beiden Schleifscheiben hinaus bis in die Mittenbohrung der zweiten Schleifscheibe, so dass beide Schleifscheiben um eine gemeinsame Achse laufen.

In einer Ausgestaltung der Erfindung ist weiterhin eine Schraube umfasst, welche länger ist, als die für die einfache Vorrichtung mit einer Schleifscheibe vorgesehene Schraube. Die für Vorrichtungen, die bereits auf dem Markt befindlich sind, vorgesehenen Schrauben haben nur die minimale Länge, die erforderlich ist um eine Scheibe sicher zu befestigen. Diese Länge ist für zwei Scheiben unter Umständen nicht ausreichend. Entsprechend ist es sinnvoll, den Bausatz mit einer zusätzlichen Schraube auszustatten, die etwa um eine Scheibendicke länger ist.

In einer weiteren Ausgestaltung der Erfindung ist zusätzlich ein Gehäuseteil umfasst, in dem wenigstens ein Durchbruch zur Führung einer zu bearbeitenden Schweißelektrode in definierter Lage zu der Schleifscheibe vorgesehen ist. Mit einem solchen Bausatz können auch solche Schleifvorrichtungen aufgerüstet werden, die zuvor nur mit einer Schleifscheibe gearbeitet haben, die nur von einer Seite genutzt wurde. Mit einem weiteren Gehäuseteil mit Durchbrüchen für Schweißelektroden, können solche Anordnungen auch zur Nutzung mit zwei Schleifscheiben umgerüstet werden. Das weitere Gehäuseteil ist insbesondere der Motorflansch. Dabei wird der "alte" Motorflansch ohne Bohrungen durch einen "neuen" Motorflansch mit Bohrungen ersetzt.

Die Erfindung betrifft neben einem Bausatz zum Nachrüsten bekannter Vorrichtungen auch eine Vorrichtung zur Bearbeitung von Schweißelektroden der eingangs genannten Art. Diese Vorrichtung weist auf:
(a) einen Distanzring, dessen Durchmesser dem Durchmesser des Gehäuses entspricht und dessen Dicke der Dicke einer Schleifscheibe entspricht; und
(b) eine Zentrierhülse, mit einer Länge in axialer Richtung, die größer ist, als die Dicke der Schleifscheibe.

Anders als bekannte Vorrichtungen mit zwei Schleifscheiben in einem gemeinsamen Hohlraum arbeitet die erfindungsgemäße Vorrichtung mit einem Distanzring, welcher die Verwendung von standardmäßig gefertigten Schleifscheiben ermöglicht. Wie bei dem oben erläuterten Bausatz werden die beiden Schleifscheiben mit einer Zentrierhülse zentriert.

Vorzugsweise haben die Schleifscheiben eine unterschiedliche Körnung, und die Durchbrüche sind in einem Gehäuseteil von Bohrungen gebildet sind, deren Winkel relativ zur Schleifscheibe und deren Durchmesser denen entsprechen, welche Bohrungen in dem anderen Gehäuseteil aufweisen. Mit anderen Worten: jeder Bohrung oder zumindestens mehreren Bohrungen im ersten Gehäuseteil entspricht jeweils eine korrespondierende Bohrung gleichen Durchmessers und gleichen Anschleifwinkels im zweiten Gehäuseteil. Mit einer solchen Anordnung kann die Schleifscheibe mit grober Körnung genutzt werden um zu "schruppen", d.h. um große Mengen Material abzutragen. Die Schleifscheibe mit feiner Körnung wird dann für den Feinschliff genutzt. Da die Bohrungen die gleichen Eigenschaften haben, ändert sich der Anschleifwinkel für den gewählten Durchmesser nicht. Dabei ist es insbesondere vorteilhaft, wenn die Gehäuseteile mit der gleichen Fertigungsmaschine und/oder mit den gleichen Einstellungen beim Bohren gefertigt werden. Dann sind die Abweichungen bei den geometrischen Eigenschaften der Bohrungen besonders gering. Die Elektrodenspitzen können mit besonders großer Präzision gefertigt und/oder nachgeschliffen werden.

Vorzugsweise ist eine der Schleifscheiben mit einer nach außen in radialer Richtung vorspringenden Schneidkante versehen. Diese Schleifscheibe hat einen etwas größeren Durchmesser als die andere Schleifscheibe. Es ist aber auch möglich Schneidkanten an beiden Schleifscheiben vorzusehen, die auf den zugewandten Seiten vorgesehen sind. Sie bilden dann eine gemeinsame Schneidkante.

Vorzugsweise ist eine mitrotierende Prallscheibe vorgesehen, welche zwischen dem motorseitigen Gehäuseteil und den Schleifscheiben angeordnet ist und mit einer angeformten Hülse formschlüssig mit der Welle verbunden ist. Die Prallscheibe vermeidet das Eindringen von Staub, Materialabrieb und Schleifmaterial in den Motor oder das Lager. Der Partikeleintrag in den Motor oder das Lager kann ferner verringert werden, wenn ein gehäusefester Ring aus weichem Material, insbesondere Filz vorgesehen ist, welcher um die Hülse herum angeordnet ist.

Ausgestaltungen der Erfindung sind Gegenstand der Unteransprüche. Ein Ausführungsbeispiel ist nachstehend unter Bezugnahme auf die beigefügten Zeichnungen näher erläutert.

### Kurze Beschreibung der Zeichnungen

- Fig.1: ist eine Explosionsdarstellung einer Vorrichtung zum Schleifen von Elektroden mit zwei Schleifscheiben.

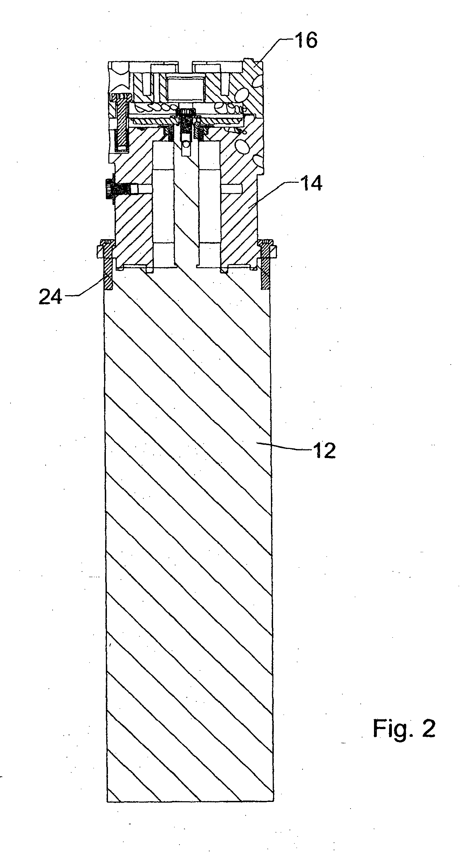

- Fig.2: ist ein Querschnitt durch eine Vorrichtung zum Schleifen von Elektroden mit einer Schleifscheibe.
- Fig.3: zeigt den Kopf der zusammengesetzten Vorrichtung im Detail.
- Fig.4a-d: zeigen eine Schleifscheibe mit Schneidkante im Detail.
- Fig.5: zeigt den Kopf der zusammengesetzten Vorrichtung als Explosionsdarstellung im Detail.

### Beschreibung des Ausführungsbeispiels

In den Figuren bezeichnet 10 allgemein eine Vorrichtung zum Schleifen von Schweißelektroden aus Wolfram. Die Vorrichtung 10 umfasst einen Motor mit einem Motorgehäuse 12, einen an dem Motorgehäuse 12 angeschraubten Motorflansch 14 und ein auf dem Motorflansch 14 aufgesetztes zylindrisches Gehäuseteil 16. Das Gehäuseteil 16 wird auf nachstehend beschriebene Weise mit dem Motor und dem Motorflansch verbunden. Im Bereich zwischen dem Motorflansch 14 und dem Gehäuseteil 16 läuft eine Schleifscheibenanordnung 18 mit Schleifscheiben 20 und 22 unterschiedlicher Körnung um.

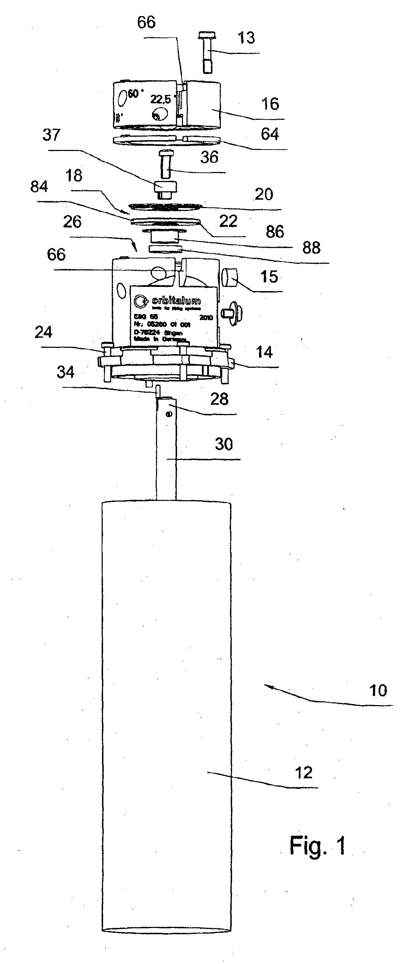

Der Flansch ist mit Bohrungen versehen. Über diese Bohrungen wird der Motorflansch 14 am Motorgehäuse 12 auf die in Fig.1 dargestellte Weise mit Schrauben 24 verschraubt. Das Gehäuseteil 16 wird mit einer Schraube 13 und einer Mutter 15 fest mit dem Motorflansch 14 verbunden. Hierzu weist das Gehäuseteil 16 eine Durchgangsbohrung und der Motorflansch eine Aufnahme für die Mutter 15 auf.

An dem dem Motor abgewandten Ende 26 des Motorflansches 14 ist eine scheibenförmige Vertiefung vorgesehen. Diese Vertiefung dient der Aufnahme der Schleifscheibe 22. Die Welle 30, mit welcher die Schleifscheibenanordnung 18 mit dem Motor verschraubt wird, ist gleichzeitig die Motorwelle.

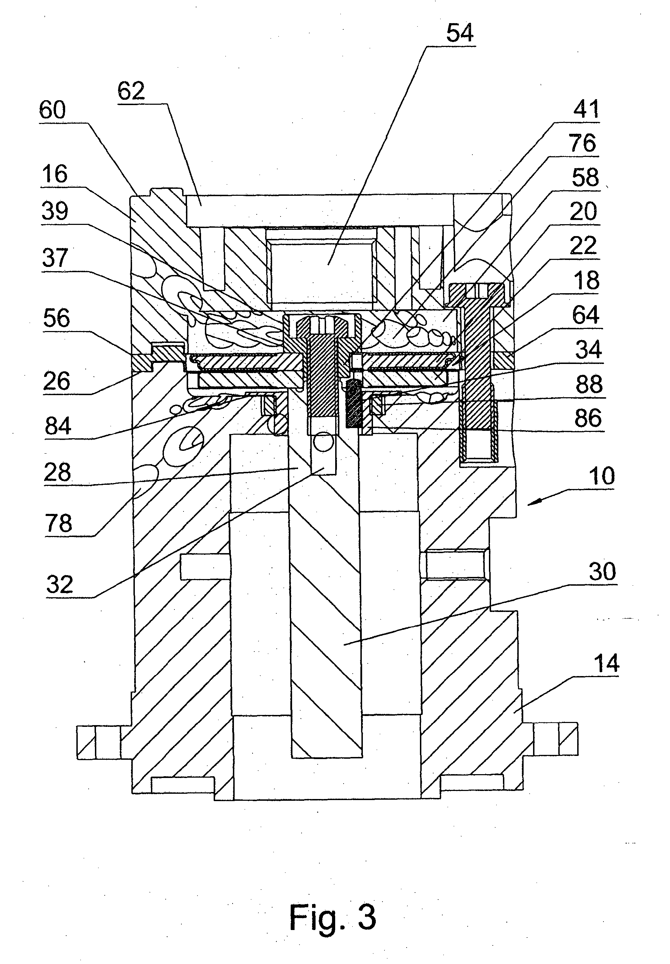

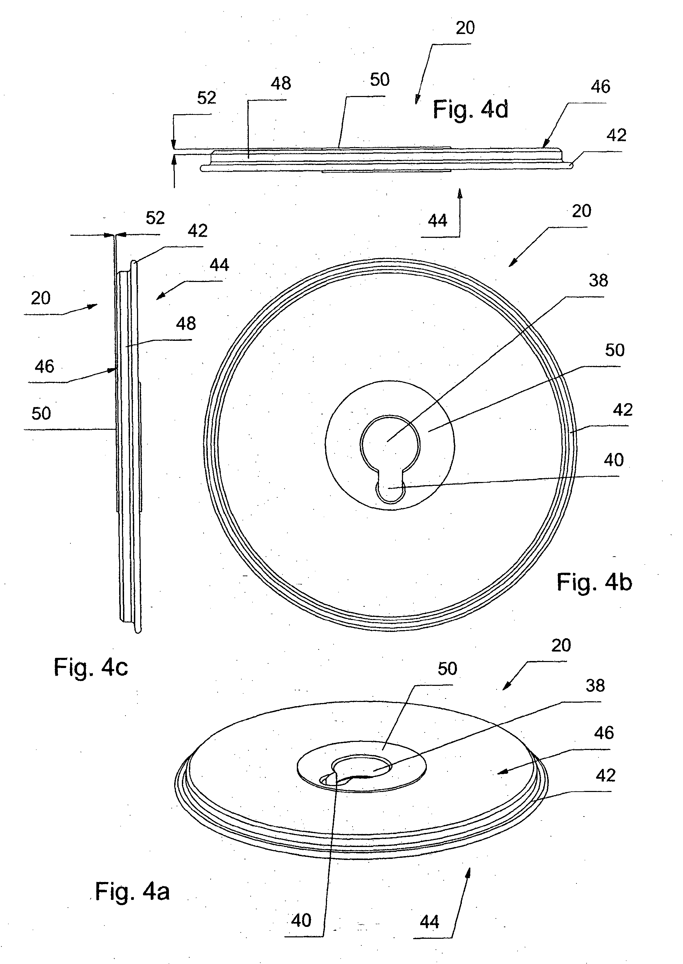

Die Welle 30 weist einen vorderen Teil 28 auf. Weiterhin weist die Welle 30 mit vorderem Teil 28 eine Bohrung 32 mit einem Innengewinde auf. Außerdem ist ein außeraxialer Stift 34 an dem vorderen Teil 28 befestigt. Die Schleifscheiben 20 und 22 der Schleifscheibenanordnung 18 sind mit einer zentralen Bohrung 38 und einer damit verbundenen, außeraxialen Bohrung 40 versehen. Diese sind in Figur 4 a und 4b erkennbar. Die Schleifscheiben 20 und 22 werden so auf die Welle 30 aufgesetzt und mit einer Schraube 36 verschraubt, dass die zentrale Bohrung 38 mit der axialen Bohrung 32 in der Welle 30 fluchtet und der Stift 34 durch die außeraxiale Bohrung 40 in der Motorseitigen Schleifscheibe 22 ragt. Die Rotation erfolgt um die Achse der Bohrungen 32 und 38, wobei der Stift 34 in die Bohrung 40 eingreift und die Antriebskraft auf die Schleifscheibenanordnung 18 überträgt. Eine Zentrierhülse 37 wird von oben durch die Mittenbohrungen 38 der beiden Schleifscheiben 20 und 22 gesteckt. Die Zentrierhülse 37 weist am oberen, dem Motor abgewandten Ende eine Aufnahme 39 für den Schraubenkopf der Schraube 36 auf. Die Zentrierhülse 37 sorgt dafür, dass beide Schleifscheiben 20 und 22 um die gleiche Achse rotieren. Die Zentrierhülse 37 weist ferner eine vorspringende Nase 41 auf. Die Nase greift in die außeraxialen Bohrungen 40 der Schleifscheiben 20 und 22. Auf diese Weise wird die Antriebskraft des Motors von der ersten, motorseitigen Schleifscheibe 22 über die Zentrierhülse 37 auf die zweite, obere Schleifscheibe 20 übertragen. Die Zentrierhülse 37 wird gemeinsam mit den Schleifscheiben 20 und 22 mit der Schraube 36 an der Welle verschraubt. Dies ist besonders gut in Figur 3 erkennbar.

In diesem Ausführungsbeispiel umfasst die Schleifscheibenanordnung 18 eine grobkörnige Schleifscheibe 20 und eine ansonsten gleichermaßen aufgebaute, feinkörnige Schleifscheibe 22. Die Schleifscheibe 20 weist einen besonders feinen Rand 42 auf. Dieser Rand 42 dient zum Schneiden der Elektroden mit verbessertem Schneidverhalten. Der Rand ist so an die Schleifscheibe 20 angeformt, dass er mit einer Seite in der Schleifebene liegt. Dies ist in Figuren 4d und 4c besonders gut zu erkennen. Auf diese Weise ist eine der Schleifflächen, nämlich die Schleiffläche 44 auf der Seite des Randes 42 größer, als die gegenüberliegende Schleiffläche 46.

Die Schleifscheiben 20 und 22 werden aus einem Rohling 48 gefertigt. Der Rohling 48 wird in ein Bad mit Schleifmittel getaucht. Das Schleifmittel, etwa Diamantsplitter einer ausgewählten Körnung, haftet dann an dem Rohling. Je nach Körnung werden unterschiedliche Rohlinge verwendet. Jeder Rohling hat einen unbeschichteten Mittenbereich 50. In diesem Mittenbereich 50 sind die Bohrungen 38 und 40 vorgesehen. Der Mittenbereich 50 hat eine für alle Rohlinge gleiche, von der Körnung unabhängige Standarddicke. Entsprechend liegen die Scheiben bei Verwendung mehrerer Scheiben hier vollständig plan aufeinander. Die Rohlinge weisen ferner eine bis zum Rand reichende, flächenhafte Vertiefung auf. Die Vertiefung bildet quasi einen langgestreckten, sich über den gesamten Winkelbereich des Rohlings erstreckenden Absatz. In der Ebene des Randes 42 hat der Absatz einen größeren Außendurchmesser, als in der gegenüberliegenden Ebene. Dies ist in Figur 4c und 4d zu erkennen. Die Tiefe der Vertiefung, in Figur 4d und 4c mit 52 bezeichnet, entspricht der durchschnittlichen Dicke der ausgewählten Körnung. Wenn eine feine Körnung ausgewählt wird, hat die Vertiefung eine geringe Tiefe 52. Wenn eine grobe Körnung ausgewählt wird, hat die Vertiefung eine größere Tiefe 52. In jedem Fall ist die Tiefe 52 der Vertiefung so ausgewählt, dass die Dicke der Schleifscheibe über ihre gesamte Fläche im wesentlichen gleich ist. Die Schleifscheiben liegen dann plan aufeinander bzw. erfordern immer den gleichen Hohlraum, in dem sie umlaufen unabhängig von der Körnung.

Wenn die Schleifscheibenanordnung 18 mit der Welle 30 eingesetzt ist, wird das im wesentlichen zylindrische Gehäuseteil 16 und ein Distanzring 64 koaxial auf den Motorflansch 14 aufgesetzt.

Das Gehäuseteil 16 ist mit einer Mittenbohrung 54 versehen. Diese ist in Figur 3 zu erkennen. Die Mittenbohrung 54 fluchtet mit den Bohrungen 38 der Schleifscheibenanordung 18 und der Rotationsachse der Welle 30. Um die Bohrung 54 herum ist an der dem Motor zugewandten Planseite 56 eine scheibenförmige Vertiefung 58 vorgesehen. Auf der dem Motor abgewandten Planseite 60 des Gehäuseteils 16 ist eine Vertiefung 62 vorgesehen Diese Vertiefungen 58 und 62 haben in etwa die gleichen Dimensionen wie die Vertiefung auf der Planseite 26 im Motorflansch 14. Die Vertiefungen in der Planseite 26 und die Vertiefung 58 bilden bei zusammengesetzter Anordnung zusammen einen Hohlraum. Der Hohlraum dient der Aufnahme der Schleifscheibenanordnung 18. Zwischen dem Motorflansch 14 und dem Gehäuseteil 16 ist der Distanzring 64 angeordnet. Die Dicke des Distanzrings 64 entspricht der Dicke einer Schleifscheibe 20 bzw. 22. Entsprechend wird die Differenz durch die zusätzliche Schleifscheibe ausgeglichen. Es können unabhängig von der Anzahl der Schleifscheiben immer der gleiche Motorflansch 14 und und das gleiche Gehäuseteil 16 mit der gleichen Vertiefung 26 bzw. 58 verwendet werden. Der Anschleifwinkel ändert sich nicht.

Die Vertiefung 62 an der oberen Planseite 60 dient zur Aufnahme von Mitteln zur Beseitigung von Schleifrückständen wie Staub und Schleifspäne. Das Gehäuse 16, der Ring 64 und der Motorflansch 14 weisen ferner, einen Längsschlitz 66 in radialer Richtung auf, welcher sich über die gesamte Dicke der Anordnung erstreckt. Der Längsschlitz 66 ist in Figur 1 zu erkenen. Die Schlitze 66 in Motorflansch 14, Ring 64 und Gehäuse 16 liegen übereinander. Der so gebildete Schlitz 66 ist breit genug, dass die Elektroden dort eingeführt werden können. Bei rotierender Schleifscheibenanordnung 18 kann die Elektrode an dem Rand 42 einer der Schleifscheiben gekürzt werden, indem das verbrauchte Elektrodenende oder die neu angeschliffene Elektrodenseite abgeschnitten wird.

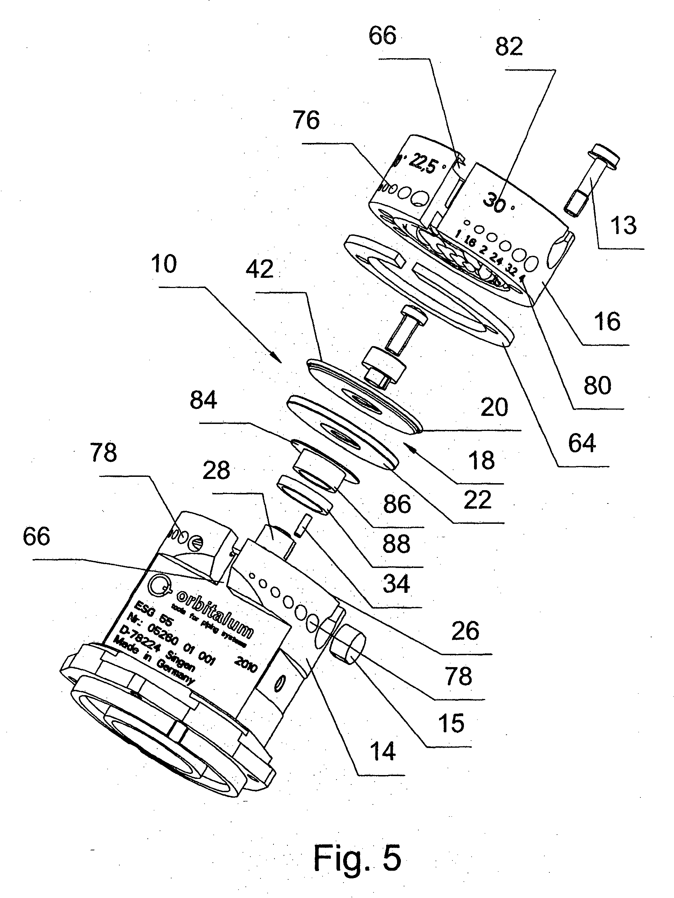

Das Gehäuse 16 und der Motorflansch 14 weisen Gruppen 76 und 78 von Durchbrüchen in Form von Bohrungen auf. Die Bohrungen erstrecken sich jeweils vom Umfang des Gehäuses 16 bzw. Motorflansches 14 zu den zugehörigen Planseiten in Richtung auf die dem Gehäuse bzw. Motorflansch nächstliegende Schleifscheibe. Jede Gruppe umfasst auf bekannte Weise eine Vielzahl Bohrungen (auch als Durchbrüche bezeichnet) unterschiedlichen Durchmessers, der jeweils oberhalb oder unterhalb der Bohrung durch eine Gravur 80 angegeben ist. Diese ist in Figur 5 erkennbar. Der Winkel, unter dem eine in eine Bohrung beziehungsweise einen Durchbruch eingeführte Elektrode auf die Schleifscheibe trifft, ist dabei innerhalb einer Gruppe von Bohrungen gleich. Die Bohrung hat also beispielsweise einen Durchmesser von 4 mm und einen Anschleifwinkel von 30 Grad. Der Anschleifwinkel ist durch eine weitere Gravur 82 oberhalb der ersten Gravur für die jeweilige Gruppe angegeben. Beispielsweise sind vier verschiedene Winkel bei einem Anschliff möglich. Dabei können Elektroden mit beispielsweise bis zu sechs unterschiedlichen Durchmessern verwendet werden. Die Elektrode wird durch die Bohrung so gut geführt, dass reproduzierbare Ergebnisse ohne Aufwand oder Gefahr erhalten werden.

Mehr Anschleifwinkel, weitere Elektrodendurchmesser oder die Verwendung einer Schleiffläche mit unterschiedlicher Körnung werden berücksichtigt, indem der Motorflansch 14 ebensolche Bohrungen 78 aufweist und zwei Schleifscheiben verwendet werden. Eine Elektrode, kann zum Beispiel zunächst grob vorgeschliffen werden, indem sie durch eine Bohrung im Gehäuse 16 geführt wird. Dabei wird für die Schleifscheibe 20, deren Abriebfläche nach oben in der Darstellung zeigt, eine grobe Körnung - vorgesehen. Zum Feinschliff wird dann eine Bohrung im Motorflansch 14 verwendet. Die zugehörige Schleifscheibe 22, deren Abriebfläche nach unten zeigt, weist eine feine Körnung auf. Sowohl die Bohrungen 76 im Gehäuseteil 16, als auch die Bohrungen 78 im Motorflansch wurden mit der gleichen Maschine mit identischen Einstellungen gefertigt. Die Bohrungen sind also mit geringen Abweichungen identisch. Die Abriebfläche liegt bei der vorliegenden Anordnung immer in der gleichen Ebene. Auf diese Weise wird ein besonders geringer Fehler beim Anschleifwinkel erreicht. Im vorliegenden Beispiel sind die Bohrungen 76 so gefertigt, dass der angegebene Anschleifwinkel erreicht wird, wenn die Abriebfläche in der Ebene 60 liegt und die Bohrungen 78, wenn die Abriebfläche in der eine Scheibendicke unterhalb der Ebene 26 liegenden Ebene liegt.

Das Gehäuse 16 weist weiterhin eine Gruppe von Bohrungen auf, welche sich senkrecht von der Oberseite zur Unterseite des Gehäuses 16 erstrecken. Auch die Bohrungen dieser Gruppe haben unterschiedliche Durchmesser, welche den Durchmessern der übrigen Gruppen entsprechen. Die Bohrungen der Gruppe ermöglichen das senkrechte Schleifen der Elektrodenspitzen.

Die gesamte Anordnung ist auf ein Handgerät aufgeschraubt. Dabei sitzt die Schleifscheibenanordnung unmittelbar vor dem Kugellager der Motorwelle 30. Dies verhindert ein Schlingern bei hohen Drehzahlen.

Zur Vermeidung des Eindringes von Staub, abgetragenem Material und Schleifmittel und dergleichen in den Motor oder das Lager ist eine Prallscheibe 84 vorgesehen. Die Prallscheibe 84 wird zwischen der motorseitigen Schleifscheibe 22 und dem Motorflansch mit einer Hülse 86 auf das obere Ende 28 der Motorwelle 30 gestülpt und rotiert mit. Die motorseitige, untere Fläche der Prallscheibe 84 ist im Bereich des Bodens der Vertiefung in der Planseite 26. Um die Hülse 86 herum ist ein Filzring 88 angeordnet, der nicht mitrotiert. Der Filzring 88 vermeidet weiteres Eindringen von Staub, abgetragenem Material und Schleifmittel in den Motor und das Lager. Der Stift 34 erstreckt sich durch eine Bohrung in der Prallscheibe 84. Auf diese Weise wird nicht nur die Schleifscheibenanordnung 18, sondern auch die Prallscheibe 84 von der Welle 30 angetrieben.

Die vorliegende Anordnung wurde eines konkreten Ausführungsbeispiels mit zwei Schleifscheiben erläutert. Es versteht sich, dass die Anordnung variiert werden kann. So ist es beispielsweise möglich, ein weiteres Gehäuseteil, ähnlich wie das Gehäuseteil 16 aufzusetzen und in dem dazwischenliegenden Hohlraum weitere Schleifscheiben vorzusehen. Auch sind unterschiedliche Gestaltungen der Bohrungen zur Führung der Elektroden denkbar.

## Patentansprüche

1. Bausatz (20, 64, 84) zum Nachrüsten einer Vorrichtung (10) zur Bearbeitung von Schweißelektroden mit einer von einem Antriebsmotor über eine Welle (30) angetriebenen Schleifscheibe (20; 22), welche in einem zweiteiligen Gehäuse (14, 16) umläuft, wobei in dem Gehäuse wenigstens ein Durchbruch (76, 78) zur Führung einer zu bearbeitenden Schweißelektrode in definierter Lage zu der Schleifscheibe (20, 22) vorgesehen ist, **gekennzeichnet, durch**
(a) eine weitere Schleifscheibe (20; 22);
(b) einen Distanzring (64), dessen Durchmesser dem Durchmesser des Gehäuses (16) entspricht und dessen Dicke der Dicke der Schleifscheibe (20;22) entspricht; und
(c) eine Zentrierhülse (37), mit einer Länge in axialer Richtung, die größer ist, als die Dicke der Schleifscheibe (20).

2. Bausatz nach Anspruch 1, **dadurch gekennzeichnet, dass** weiterhin eine Schraube (36) umfasst ist, welche länger ist, als die für die einfache Vorrichtung mit einer Schleifscheibe (20; 22) vorgesehene Schraube.

3. Bausatz nach Anspruch 1, **dadurch gekennzeichnet, dass** weiterhin ein Gehäuseteil (14) umfasst ist, in dem wenigstens ein Durchbruch (78) zur Führung einer zu bearbeitenden Schweißelektrode in definierter Lage zu der Schleifscheibe (22) vorgesehen ist.

4. Vorrichtung (10) zur Bearbeitung von Schweißelektroden mit zwei von einem .Antriebsmotor über eine Welle (30) angetriebenen Schleifscheiben (20, 22), welche in einem gemeinsamen Hohlraum in einem zweiteiligen Gehäuse (14, 16) umlaufen, wobei in den Gehäuseteilen (14, 16) jeweils wenigstens ein Durchbruch (76, 78) zur Führung einer zu bearbeitenden Schweißelektrode in definierter Lage zu der Schleifscheibe (20, 22) vorgesehen ist, **gekennzeichnet durch**
(a) einen Distanzring (64), dessen Durchmesser dem Durchmesser des Gehäuses (16) entspricht und dessen Dicke der Dicke einer Schleifscheibe (20) entspricht; und
(b) eine Zentrierhülse (37), mit einer Länge in axialer Richtung, die größer ist, als die Dicke der Schleifscheibe (20).

5. Vorrichtung (10) nach Anspruch 4, **dadurch gekennzeichnet, dass**
(a) die Schleifscheiben (20, 22) eine unterschiedliche Körnung haben, und
(b) die Durchbrüche (76; 78) in einem Gehäuseteil (14; 16) von Bohrungen gebildet sind, deren Winkel relativ zur Schleifscheibe (20; 22) und deren Durchmesser denen entsprechen, welche Bohrungen (76; 78) in dem anderen Gehäuseteil (14; 16) aufweisen.

6. Vorrichtung (10) nach einem der Ansprüche 4 bis 5, **dadurch gekennzeichnet, dass** eine der Schleifscheiben (20) mit einer nach außen in radialer Richtung vorspringenden Schneidkante (42) versehen ist.

7. Vorrichtung (10) nach einem der Ansprüche 4 bis 6, **dadurch gekennzeichnet, dass** eine mitrotierende Prallscheibe (84) vorgesehen ist, welche zwischen dem motorseitigen Gehäuseteil (14) und den Schleifscheiben (22) angeordnet ist und mit einer angeformten Hülse (86) formschlüssig mit der Welle (30) verbunden ist.

8. Vorrichtung nach Anspruch 7, **dadurch gekennzeichnet, dass** ein gehäusefester Ring (88) aus weichem Material, insbesondere Filz vorgesehen ist, welcher um die Hülse (86) an der Prallscheibe (84) herum angeordnet ist.

## Claims

1. Assembly kit (20, 64, 84) for upgrading a device (10) for processing welding electrodes with a grinding wheel (20; 22) driven by a driving motor with a shaft (30), which runs in a two-portion housing (14, 16), wherein at least one opening (76, 78) is provided in the housing for guiding a welding electrode for processing in a defined position relative to the grinding wheel (20, 22); **characterized by**
(a) a further grinding wheel (20; 22)
(b) a spacer ring (64) having a diameter corresponding to the diameter of the housing (16) and a thickness corresponding to the thickness of the grinding wheel (20; 22); and
(c) a centering sleeve (37) with an axial length which is larger than the thickness of the grinding wheel (20).

2. Assembly kit according to claim 1, **characterized in that** furthermore a screw (36) is comprised which is longer than the screw provided for the simple device with only one grinding wheel (20; 22).

3. Assembly kit according to claim 1, **characterized in that** furthermore a housing portion (14) is comprised which has at least one opening (78) for guiding a welding electrode for processing in a defined position relative to the grinding wheel (22).

4. Device (10) for processing welding electrodes with two grinding wheels (20, 22) driven by a driving motor with a shaft (30), which run in a common space inside a two-portion housing (14, 16), wherein at least one opening (76, 78) is provided in the housing for guiding a welding electrode for processing in a defined position relative to the grinding wheel (20, 22), **characterized by**
(a) a spacer ring (64) having a diameter corresponding to the diameter of the housing (16) and a thickness corresponding to the thickness of the grinding wheel (20; 22); and
(c) a centering sleeve (37) with an axial length which is larger than the thickness of the grinding wheel (20).

5. Device (10) according to claim 4, **characterized in that**
(a) the grinding wheels (20, 22) have different grain size, and
(b) the openings (76; 78) in one housing portion (14; 16) are formed by bore holes having an angle relative to the grinding wheel (20; 22) and a diameter corresponding to bore holes (76; 78) in the other housing portion (14; 16).

6. Device (10) according to any of claims 4 or 5, **characterized in that** one of the grinding wheels (20) is provided with a cutting edge (42) outwardly projecting in a radial direction.

7. Device (10) according to any of claims 4 to 6; **characterized in that** an also rotating collision disk (84) is provided which is arranged between the housing portion (14) at the motor side and the grinding wheels (22) and which is form-fittingly connected to the shaft (30) by an integrated sleeve (86).

8. Device according to claim 7, **characterized in that** a ring (88) of soft material, in particular of felt is fixed to the housing which is arranged around the sleeve (86) of the collision disk (84).

## Revendications

1. Module (20, 64, 84) de rééquipement d'un dispositif (10) d'usinage d'électrodes de soudage à l'aide d'un disque d'affûtage (20 ; 22) entraîné par un moteur d'entraînement via un arbre (30) et qui est en rotation dans un boîtier (14, 16) en deux parties, au moins un percement (76, 78) étant prévu dans le boîtier afin de guider une électrode de soudage à usiner dans une position définie par rapport au disque d'affûtage (20, 22), **caractérisé par**
(a) un disque d'affûtage supplémentaire (20 ; 22) ;
(b) une bague d'écartement (64) dont le diamètre correspond au diamètre du boîtier (16) et dont l'épaisseur correspond à l'épaisseur du disque d'affûtage (20 ; 22) ; et
(c) une douille de centrage (37) présentant une longueur dans le sens axial supérieure à l'épaisseur du disque d'affûtage (20).

2. Module selon la revendication 1, **caractérisé en ce qu**'il comprend en outre une vis (36) qui est plus longue que la vis prévue pour le dispositif simple à disque d'affûtage (20 ; 22).

3. Module selon la revendication 1, **caractérisé en ce qu**'il comprend en outre un élément de boîtier (14) dans lequel est prévu au moins un percement (78) afin de guider une électrode de soudage à usiner dans une position définie par rapport au disque d'affûtage (22).

4. Dispositif (10) d'usinage d'électrodes de soudage à l'aide de deux disques d'affûtage (20, 22) entraînés par un moteur d'entraînement via un arbre (30) et qui sont en rotation dans un espace creux commun situé dans un boîtier (14, 16) en deux parties, au moins un percement (76, 78) étant prévu à chaque fois dans le boîtier afin de guider une électrode de soudage à usiner dans une position définie par rapport au disque d'affûtage (20, 22), **caractérisé par**
(a) une bague d'écartement (64) dont le diamètre correspond au diamètre du boîtier (16) et dont l'épaisseur correspond à l'épaisseur d'un disque d'affûtage (20) ; et
(c) une douille de centrage (37) présentant une longueur dans le sens axial supérieure à l'épaisseur du disque d'affûtage (20).

5. Dispositif (10) selon la revendication 4, **caractérisé en ce que**
(a) les disques d'affûtage (20, 22) possèdent un grain différent, et
(b) les percements (76 ; 78) sont formés dans l'un des éléments de boîtier (14 ; 16) par des perçages dont l'angle par rapport au disque d'affûtage (20 ; 22) et le diamètre correspondent à ceux des perçages (76 ; 78) présents dans l'autre élément de boîtier (14 ; 16).

6. Dispositif (10) selon l'une quelconque des revendications 4 à 5, **caractérisé en ce que** l'un des disques d'affûtage (20) est pourvu d'une arrête de coupe (42) saillant vers l'extérieur dans le sens radial.

7. Dispositif (10) selon l'une quelconque des revendications 4 à 6, **caractérisé en ce qu**'il est prévu un disque d'amortissement (84), également en rotation, qui est disposé entre l'élément de boîtier (14), situé du côté moteur, et les disques d'affûtage (22) et qui est relié de par sa forme complémentaire à l'arbre (30) à l'aide d'une douille (86) moulée dessus.

8. Dispositif selon la revendication 7, **caractérisé en ce qu**'il est prévu une bague (88) fixe par rapport au boîtier et composée d'un matériau non rigide, notamment de feutre, et qui est disposée autour de la douille (86) sur le disque d'amortissement (84).
